# EUROPEAN PATENT SPECIFICATION

(11) **EP 3 141 298 B1**
(45) Date of publication and mention of the grant of the patent: **12.08.2020**
(21) Application number: 16386017.4
(22) Date of filing: 08.09.2016
(51) Int. Cl.: B01L 3/00, B01F 13/00, B01F 5/06, B29C 59/14

(54) **POLYMERIC MICROFLUIDIC DEVICE FOR NUCLEIC ACID PURIFICATION FABRICATED VIA PLASMA MICRO-NANOTEXTURING**
DURCH PLASMA-MIKROTEXTURIERUNG HERGESTELLTE, POLYMERE MIKROFLUIDISCHE VORRICHTUNG ZUR NUKLEINSÄUREREINIGUNG
DISPOSITIF MICROFLUIDIQUE POLYMERE POUR LA PURIFICATION D'ACIDE NUCLEIQUE FABRIQUE PAR MICRO-NANO-TEXTURATION PAR PLASMA

(30) Priority: 09.09.2015 GR 20150100398
(43) Date of publication of application: 15.03.2017
(73) Proprietor: NATIONAL CENTER FOR SCIENTIFIC RESEARCH "DEMOKRITOS", 15341 Agia Paraskevi Attikis (GR); Gogolides, Evangelos, 15341 Agia Paraskevi Attikis (GR); Tserepi, Angeliki, 15341 Agia Paraskevi Attikis (GR)
(72) Inventor: Gogolides, Evangelos, 15341 Agia Paraskevi Attikis (GR); Tserepi, Angeliki, 15341 Agia Paraskevi Attikis (GR); Kastania, Athina, 15341 Agia Paraskevi Attikis (GR); Kokkoris, George, 15341 Agia Paraskevi Attikis (GR)

(56) References cited:
- EP-A1- 2 918 675
- WO-A2-2006/135818
- US-A1- 2013 130 364
- KATERINA TSOUGENI ET AL: "Controlled protein adsorption on microfluidic channels with engineered roughness and wettability", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER BV, NL, vol. 161, no. 1, 11 October 2011 (2011-10-11), pages 216-222, XP028447718, ISSN: 0925-4005, DOI: 10.1016/J.SNB.2011.10.022 [retrieved on 2011-10-18]
- KATERINA TSOUGENI ET AL: ""Smart" polymeric microfluidics fabricated by plasma processing: controlled wetting, capillary filling and hydrophobic valving", LAB ON A CHIP, vol. 10, no. 4, 1 January 2010 (2010-01-01), pages 462-469, XP055179809, ISSN: 1473-0197, DOI: 10.1039/B916566E
- TSOUGENI K ET AL: "Mechanisms of oxygen plasma nanotexturing of organic polymer surfaces: From stable super hydrophilic to super hydrophobic surfaces", LANGMUIR, AMERICAN CHEMICAL SOCIETY, US, vol. 25, no. 19, 6 October 2009 (2009-10-06), pages 11748-11759, XP002683835, ISSN: 0743-7463, DOI: DOI:10.1021/LA901072Z [retrieved on 2009-09-08]

## Description

### Field of the Invention

The present invention relates to the field of deoxyribonucleic acid (DNA) purification on portable and disposable miniaturized polymeric laboratory on chips (LOC).

### Background of the invention

DNA purification is a fundamental procedure traditionally done in a laboratory prior to other procedures, and is of high importance to food industry, medicine, forensics or elsewhere, where collection of DNA without impurities is a necessary step after cell lysis and before DNA analysis. Conventional laboratory techniques (J. Sambrook, et al., Molecular Cloning: A Laboratory Manual (Third Edition), 2001, 1-2100) usually involve organic solvent utilization, such as phenol/chloroform extraction, purification with beads such as silica or magnetic particles [US publication number US5705628(A) or US5898071(A), PCT publication number: WO1996009379(A1)] or purification with spin-columns [US publication number US20080300397 (A1), PCT publication number: WO2008150826(A1)] depending on the sample origin, the type of DNA and the purpose of the purification.

With the advent of micro/nanotechnology, laboratory analysis procedures are miniaturized into microchips due to many advantages such as reduced experimental time, smaller sample and reagent volumes, low contamination risk, automation, low cost and compatibility with downstream processes. When DNA is not adequately purified from cells or complex samples, the downstream processes e.g. polymerase chain reaction (PCR) can be drastically inhibited (I. G. Wilson, Applied and Environmental Microbiology, 1997, 63, 3741-3751) and the sensitivity of the DNA analysis is decreased. For all the above reasons a DNA purification microfluidic chip is considered of high significance.

A number of recent review papers (S. J. Reinholt, et al., Angewandte Chemie International Edition, 2014, 53, 13988-14001, J. Wen, et al., Analytical Chemistry, 2008, 80, 6472-6479, C. W. Price, et al., Lab on a Chip, 2009, 9, 2484-2494) have classified and categorized DNA purification techniques in microfluidic chips. In particular, Reinholt et al. categorize on chip DNA purification techniques as follows: 1) silica based techniques that include packed silica beads, matrices containing silica beads, silica microstructures or silica membranes/monoliths (C. J. Easley, et al., Proceedings of the National Academy of Sciences, 2006, 103, 19272-19277, M. D. Kulinski, et al., Biomedical Microdevices, 2009, 11, 671-678, M. C. Breadmore, et al., Analytical Chemistry, 2003, 75, 1880-1886), 2) paramagnetic bead techniques that include silica coating, switchable charges, oligo-deoxythymidine (oligo-dT) coating or specific nucleic acid sequence coating (B. Rittich, et al., Journal of Separation Science, 2013, 36, 2472-2485), 3) specific modifications of the surface techniques, that include oligonucleotides on polymer surfaces, chitosan-coated beads, aluminum oxide membranes, photoactivated polycarbonate surfaces or amine-coated surfaces (T. Nakagawa, et al., Journal of Biotechnology, 2005, 116, 105-111, W. Cao, et al., Analytical Chemistry, 2006, 78, 7222-7228, J. Kim, et al., Lab on a Chip - Miniaturisation for Chemistry and Biology, 2008, 8, 1516-1523) and 4) liquid phase techniques that include electrophoretic techniques or organic solvents techniques (A. Persat, et al., Analytical Chemistry, 2009, 81, 9507-9511). The liquid phase techniques require electric field, additional sample removal with pipetting or safe handling of hazardous solvents e.g. phenol/chloroform, and are thus not amenable to microfluidic integration into LOC.

The techniques usually employed for DNA purification on-chip are mostly based on solid phase extraction performed in a microchip, also known as micro solid phase extraction. Solid-phase extraction (SPE) is defined as a sample purification process wherein solutes dissolved or suspended in a liquid (known as the mobile phase) pass through / over a solid (known as the solid phase) and are separated; separation is based on the different affinity of the solutes to the solid phase. The solid phase concerns the solid surface inside the microchip or the solid support integrated inside the microchip and includes beads, monoliths, membranes and suitable chip surfaces or specially modified chip surfaces. Solid phase extraction consists of three steps: 1) Binding of the DNA on the solid phase, 2) Washing with an appropriate buffer for removing impurities/contaminants and 3) Collection of DNA (J. M. Walker, et al., Molecular Biomethods Handbook: Second Edition, 2008, 1-1124). DNA purification on-chip depends on nucleic acid interactions with various functional groups such as NHₓ, SOₓ, Al_{y}Oₓ and COOH, which preexist in the solid phase, such as glass, silica, aluminum oxide, or are created on the solid phase surface after modification of the solid surface material with various techniques, such as photoactivation or wet chemistry. Wet chemistry includes coating or grafting of the surface with organic or inorganic reagents (e.g. oligonucleotides), or with charge-switchable materials (e.g. polyethyleneimine and chitosan), or with organosilanes (e.g. 3-aminopropyltriethoxysilane (APTES), 3-[2-(2-aminoethylamino)-ethylamino]-propyltrimethoxysilane (AEEA) and tetramethyl orthosilicate (TMOS) (S. J. Reinholt, et al., Angewandte Chemie International Edition, 2014,53,13988-14001, J. Wen, et al., Analytical Chemistry, 2008,80,6472-6479, C. W. Price, et al., Lab on a Chip, 2009, 9,2484-2494). With regard to polymer surfaces as solid phase, there are a number of surface modifications that can be done so that biomolecules are immobilized on the surfaces (J. M. Goddard, et al., Progress in Polymer Science, 2007, 32, 698-725). By far, the most tested solid phase reversible immobilization for DNA purification is silica-based extraction, particularly with silica-based beads that may or may not be magnetic.

There are a lot of limitations on the methods already used for DNA purification on-chip: a) limited manufacturability potential for large scale chip fabrication (e.g. long fabrication processes), b) high fabrication or operational cost, c) difficult handling protocols, (e.g. handling beads) or requiring large volume samples, d) limited self-life of some of the surface functional groups needed for DNA purification. e) Presently, the efficiency and capacity of the chips are usually low particularly in the case of DNA extraction from complex systems (S. J. Reinholt, et al., Angewandte Chemie International Edition, 2014, 53, 13988-14001, J. Wen, et al., Analytical Chemistry, 2008, 80, 6472-6479). f) most of the chips cannot purify the DNA from small numbers of cells and thus cannot perform a single-cell analysis, and g) almost all chips do not have a high dynamic range of DNA purification targeting from low to high level of cell numbers. Indeed, concerning f) and g), only a limited number of chips using paramagnetic particles have so far achieved low limit of detection with targeting a few cells. For example, Kashkary et al. targeted the extraction of DNA from 62-1500 cells (L. Kashkary, et al., Analytica Chimica Acta, 2012, 750, 127-131) with an efficiency that was higher for 62 cells but it was dramatically decreased for more than 100 cells. h) Presently, chip designs cannot achieve mixing of reagents and DNA sample, and require premixing prior to injection in the microfluidic (M. A. Witek, et al., Nucleic Acids Research, 2006, 34, e74, A. Bhattacharyya, et al., Analytical Chemistry, 2006, 78, 788-792, L. A. Legendre, et al., Analytical Chemistry, 2006, 78, 1444-1451).

However, mixing of the suitable precipitating / binding buffers on the solid phase and the DNA sample is not easy on microfluidic formats, where two liquids tend to move alongside each other without mixing. They only mix, when the geometries of the microchip change rapidly, as it happens in a micromixer (O. Geschke, et al., Microsystem Engineering of Lab-on-a-Chip Devices, 2004, 1-258). Therefore chip designs must include a mixer if premixing is not an option. i) Most of the present DNA purification microfluidic chips are not amenable to integration in a complete LOC useful as point-to-care or food or microbiology LOC diagnostic.

What is missing, therefore, is a DNA purification polymeric chip with the appropriate design for mixing, amenable to integration, fabricated by a low-cost technology amenable to large scale manufacturing. One additionally desires that the chip will bear high surface area and high number of functional groups in order to have a high dynamic range of purification capability i.e. such as DNA purification from 1 to at least 10⁸ cells (corresponding to 0.005pg to 500ng of Salmonella DNA of MW 4857 kbp (I. Hein, et al., Journal of Microbiological Methods, 2006, 66, 538-547)).

Among the various chemistries used for solid-phase extraction of DNA the COOH based chemistry is easier to apply on polymeric substrates. The particular approach was proposed by the group of Soper, who used 30min UV irradiation of Polycarbonate (PC) to create COOH groups on the polymer and use them for DNA purification. (Y. Xu, et al., Analytical Chemistry, 2003, 75, 2975-2984, M. A. Witek, et al., Nucleic Acids Research, 2006, 34, e74, D. S. W. Park, et al., Biomedical Microdevices, 2008, 10, 21-33, M. A. Witek, et al., Analytical Chemistry, 2008, 80, 3483-3491). Yet, the method is slow, the density of COOH groups is low, and their number decays with time, a phenomenon known as ageing. A comparison between UV radiation and plasma treatment of polystyrene suggests a higher oxidation level and more carbonyl/carboxyl groups on the plasma treated surface than on the UV-radiated surface (D. Zhang, et al., Langmuir, 2000, 16, 4528-4532). Tsougeni et al have recently proposed a method to micro-nanotexture polymers with oxygen containing plasmas, which creates a high surface area and a high density of COOH groups on their surface, which show very little decay with time, i.e. practically limited ageing. (K. Tsougeni, et al., Langmuir, 2009, 25, 11748-11759).

### Summary of the invention

The present invention provides a microfluidic chip capable of mixing the DNA purification buffers with the DNA samples inside the microchannel, while simultaneously purifying DNA through solid phase extraction. This microchip is fabricated with a technology based on plasma random roughening (micro-nanotexturing), while at the same time creating high density of carboxyl groups, which are stable over time. The microfluidic chip can isolate DNA with high efficiency and recovery in the range of DNA from 1-10⁸ cells from various samples such as human genomic DNA (hgDNA), bacteria cell DNA and other cell types.

### Brief description of the drawings

Figure 1 of comparative example 1 shows: (a) a schematic outline of the microfluidic chip design, (b) a schematic of the V-shaped zigzag cell of the microchannel and (c) a tilted view Scanning Electron Microscopy (SEM) image of micro-nanotextured surface inside the microchip according to the present invention.
Figure 2 of comparative example 1 shows: (a) the bacteria DNA purification experiment from 500ng of DNA (corresponding to approximately 10⁸ cells) as a UV absorbance signal at 260nm of microfludic chip effluent versus time and (b) its purification efficiency versus the total eluted volume of the effluents in microliters (µL).
Figure 3 of comparative example 2 shows human genomic DNA purification experiment from 200ng of prepurified hgDNA (molecular weight of 50-250kb) as a UV absorbance signal at 260nm of microfluidic chip effluent versus time.
Figure 4 of comparative example 3 shows the chip ability to purify very small quantities of DNA corresponding to 10 and 100 bacteria cells via a gel electrophoresis image of off-chip amplified DNA.

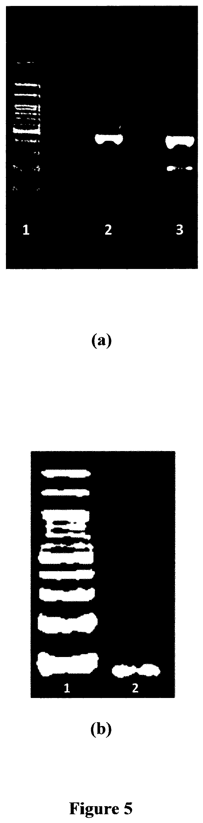

Figure 5 of comparative example 4 shows the chip ability for integration into a lab on chip, and for purification of small DNA concentrations corresponding to 5, 50 and 500 bacteria cells: (a) a gel electrophoresis image of off-chip amplified DNA originating from 50 and 5 Salmonella cells after integration of a bacteria cell capture and lysis microchip and the DNA purification microchip and (b) a gel electrophoresis image of on chip amplified DNA originating from 500 cells after integration of a bacteria cell capture and lysis microchip, the DNA purification microchip and a Helicase Dependent isothermal Amplification (HDA) microchip.
Figure 6 shows the performance of (a) a thermally stabilized microchip (4 months after fabrication) and (b) a freshly fabricated microchip (after oxygen plasma) as a UV absorbance signal versus time.

### Detailed description of the invention

The present invention provides a microfluidic chip comprising a polymeric surface which offers an inexpensive solution for point-of-care systems. The term "polymeric surface" signifies a surface that is either a polymer or any other material which is coated with a polymer film. According to the present invention, the term "polymer" means a material comprising many repeated subunits (monomers) containing carbon, oxygen and hydrogen, while in some cases Silicon may also be present.

Preferably, the polymer of the present invention belongs to the group of polymers or copolymers containing acrylic, or olefin, or phenolic monomers, silicones or silicon containing monomers. More preferably, the polymer is selected from the group consisting of poly(methyl methacrylate) (PMMA), polyether ether ketone (PEEK), cyclic olefin copolymer (COC), cyclo-olefin polymer (COP), polyethylene terephthalate (PET), polystyrene (PS), polycarbonate (PC). Even more preferably, the organic polymer is poly(methyl methacrylate) (PMMA). The technology presented herein can also be applied in silicon-containing polymers such as ORMOCOMP®, polydimethylsiloxane (PDMS) and PDMS-acrylate copolymers, although the DNA purification chemistry may be based not on COOH but SiOx groups in this case.

The polymer is preferably used in the form of plates, or foils, or films spin-coated on flat surfaces (such as silicon wafers, metal, or glass slides), or casted in molds.

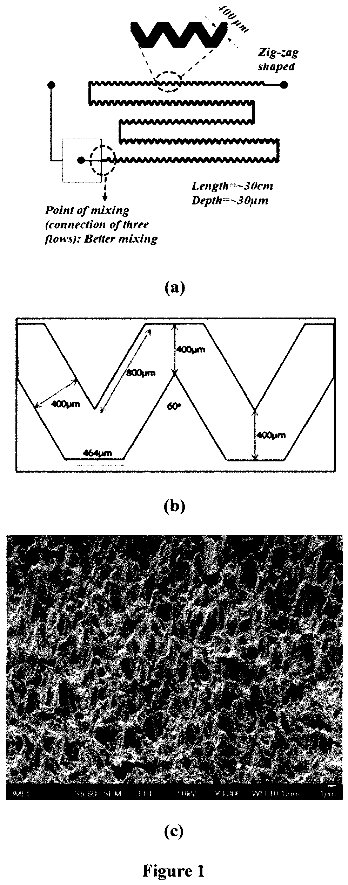

The microfluidic chip of the present invention comprises a passive micromixer. The term "passive micromixer" means a microfluidic channel that has the ability of mixing fluids inside without the requirement of external energy apart from the energy required for pumping the fluids. Preferably the design of the passive micromixer belongs to Y or T shaped and multi-input channels, or channels with a - suitably alternating - cross section or channels with microscopic three-dimensional geometries inside as barriers (posts) or grooves or channels with split-and-merge geometries or channels with zigzag geometry or a combination of the above. More preferably, the design of the micromixer is selected to combine the benefits of a T shaped channel with the zigzag geometry as explained in V. E. Papadopoulos, et al., Microelectronic Engineering, 2014, 124, 42-46. Even more preferably, the micromixer is a T shaped channel with zigzag geometry with an angle amongst the zigzags that ranges from 40-75°, with two inlets with channel width that ranges from 50-300 µm, merging in a 100-600 µm-wide main channel respectively, with posts or without posts inside the main channel and with a length that consists of 20-400 zigzags. Figure 1 (a) shows a schematic outline of a micromixer which has two inlets with channel width of 200 µm, merging in a 400 µm-wide main channel with zigzag geometry, with a length of 30cm, a depth of 30 µm and an angle amongst the zigzags of 60°. According to the present invention, the "zigzag" is defined as a V-shaped (not W-shaped) cell of the channel. A schematic of the V-shaped zigzag cell of the microchannel is shown in Figure 1 (b). This geometry promotes thorough mixing and allows high flow rates because of lower pressure drops along the microchannel.

The microfluidic channels are fabricated with any known method such as injection molding, hot-embossing, lithography, lithography followed by plasma etching, etc. Following the fabrication and before sealing, the microfluidic channels are micro-nanotextured with the plasma.

"Micro-nanotexturing" is defined as a surface roughening process, where roughness appears as a surface texture comprising random, micro and nano scale rough elements. In particular Plasma micro-nanotexturing is effected by a plasma etching process with simultaneous surface roughening. A typical plasma micro-nanotextured surface is shown in Fig. 1c.

Micro-nanotexturing is effected using Oxygen or Fluorine-containing plasmas, so as to increase their surface area by a factor of at least 3 and create appropriate chemical groups. If the microfluidic channels are fabricated by lithography followed by plasma etching, plasma micro-nanotexturing may be combined with the plasma etching in one step. Figure 1 (c) depicts a tilted view Scanning Electron Microscopy (SEM) image of micro-nanotextured surface inside the microchip of the present invention showing the high surface area. The plasma micro-nanotexturing process has been described in previous patent applications (Greek patent Application number: 20050100473, PCT publication number: WO2007031799) and (Greek patent Application number: 20080100404, PCT publication number: WO2009150479).

The surfaces of the present invention are etched and simultaneously micro-nanotextured in oxygen containing plasmas. Typical gases are Oxygen (including Oxygen in mixtures with inert gases or with nitrogen). For silicon containing polymers oxygen plasmas follow the SF₆ micro-nanotexturing.

The micro-nanotexturing of the organic polymer or silica contained polymer surfaces may be carried out using a high density helicon or inductively coupled plasma reactor, or a reactive ion etcher, or other plasma etchers.

According to the present invention, micro-nanotexturing must be conducted under anisotropic etching conditions in the presence of etching inhibitors originating from sputtering of plasma reactor walls or electrodes. Typical operating pressures from 0.4-7 Pa and preferably 0.5-2Pa, typical plasma power ranges from 100 - 3000 W and preferably 1500-3000W, and typical bias voltage ranges from -50 - -300 V. For lower density reactive ion etchers the conditions of pressure ranges from 5 - 100 mT, and of plasma power ranges from 100 - 1000 W. Typical sputtered electrode materials or dielectric walls include alumina, quartz, or other metallic or metal oxide materials. Plasma etching chemically modifies the surface of the present invention i.e. creates functional groups on the surface of the present invention such as carboxyl groups/carbonyl groups in organic polymer surfaces and silica like groups (SiOx) in the case of silicon containing polymer surfaces, thus creating functionality of the surface.

After plasma treatment and before sealing of the microchip the polymer is annealed at a temperature below the polymer glass transition temperature T_{g}, between 5 and 40 degrees below T_{g}, and preferably 10 degrees below the T_{g} for 10-120 min to effect accelerated ageing of the chemical functionality, which becomes stable for months. This step increases the shelf life of the device.

In the present invention the microchip with the embedded micro-nanotextured surfaces which bear functional groups as described above facilitates solid phase extraction of DNA.

In the present invention DNA purification on chip under continuous flow takes place. DNA containing sample, which can originate from various sources, such as cell lysates from blood, food, water, environmental samples, bacteria or any other solution that contains DNA, is injected through one inlet of the microchip. At the same time through the second inlet a precipitating/binding buffer is injected such as polyethylene glycol solution, ethanol solution, chaotropic or non-chaotropic salt solution or their mixtures. Due to the design thorough mixing takes place among them and DNA is immobilized on the plasma created functional groups i.e. -COOH groups or -Si-O- groups on the surface of the microchip.

A "solid phase extraction material" is defined as a material bearing functional groups which are responsible for solute-solid interaction and sample purification during solid phase extraction. For DNA purification, the solid phase extraction material (bearing for example COOH or -Si-O- functional groups created by the plasma) interacts with DNA and causes its precipitation. In addition to the COOH and -Si-O- groups (e.g. SiO₂) which are created by the plasma, any other solid phase extraction material can be used e.g. TiO₂, ZrO₂, Al₂O₃, or other metal oxides, or amines (e.g. using APTES or AEEA). These solid phase extraction materials can be deposited as an ultrathin layer on the micro-nanotextured topography taking advantage of the high surface area of the device. Thus, on the micro-nanotextured surface various solid phase extraction materials may exist. DNA purification protocols have to be adjusted to the functionality deposited on the micro-nanotextured surface.

According to the present invention, the term "precipitating/binding" buffer is a solution that causes or enhances the immobilization of DNA on the micro-nanotextured surface due to various interactions with DNA such as precipitation, hydrogen bonding or other electrostatic interactions, or pH-induced binding on the surface.

After an intermediate washing step with buffers for removing any impurities such as cell debris and proteins, elution of DNA, i.e. isolation and collection, is conducted with water or PCR compatible buffer.

The present invention provides plasma micro-nanotextured microfluidic chips for DNA purification that can be applied for food, microbiology, environmental, medical/clinical, diagnostics and forensics analysis. Particularly it can be applied for food pathogen detection, such as Salmonella, or Bacillus cereus or other pathogen detection in food or for pathogen detection in blood or other human samples, or other environmental samples, including water samples.

The advantages of the present invention include simplicity, rapidity and stability over time of the surfaces inside the present invention, compared to other purification protocols where the surfaces must be used rapidly after surface modification, because they are prone to degradation in air.

The present invention demonstrates high DNA capture and recovery i.e. high binding capacity and high efficiency for purification of DNA containing samples preferably bacteria DNA or human genomic DNA or more preferably Salmonella DNA.

Moreover, the present invention provides DNA purification from cell lysates that correspond to only a few cells and bears the capability of single cell analysis. Therefore, the chip has a huge dynamic range of at least 1-10⁸ cells which corresponds to 0.005pg to at least 500ng.

The present invention provides a ready to use module or a module amenable to integration in a lab-on-chips.

In addition the present invention allows reduced experimental times allowing large flow rates per microchannel (e.g. 10µl/min).

Finally, the present invention can be used with nucleic acids other than DNA such as ribonucleic acid (RNA) as well as peptide nucleic acid (PNA), which is a an artificially synthesized polymer, or fragments of them.

### Examples

### Comparative Example 1: Large quantity of Salmonella DNA purification on a plasma micro-nanotextured polymeric microchip

### A) Microfluidic Chip Fabrication.

First, 2mm thick PMMA plates were spin-coated with ORMOCOMPⓇ (Microresist) negative tone photoresist and were baked at 80 °C for 4 min. Second, the thick organic layer of photoresist was exposed through a photomask (bearing the design shown in Fig. la,b) using UV broadband light source at 365 nm. These lithographed PMMA sheets were micro-nanotextured in O2 plasmas in a Helicon Plasma reactor with unshielded electrostatic fields (MET system, Adixen). The oxygen plasma process anisotropic conditions include: 1900 W source power, 0.75 Pa pressure, 100 sccm oxygen flow, -100 V bias voltage, and sample temperature during etching -20°C, resultingin an etch rate ∼ 990 nm/min for PMMA. Oxygen plasma etching was used to micro-nanotexture PMMA surfaces, to create substrates with increased surface area for DNA immobilization. The final microchip was sealed with a polyolefin lamination film (3M Advanced Polyolefin Microplate Sealing Tape 9795 from 3M Co.) via a laminator at 75°C.

### B) DNA Purification

The DNA purification protocol used consists of three basic steps: a) Immobilization of DNA, b) Ethanol Washing step and c) Elution with Water. At first, a small plug volume of pre-purified Salmonella DNA of 500ng was injected on the chip through one inlet followed by a solution containing 5% PEG, 0.4M NaCl and 70% ethanol as precipitating/binding buffer, while at the same time the same precipitating/binding buffer is injected through the other inlet. Afterwards 85% ethanol was injected through both inlets of the chip so that impurities would be removed. Then water was injected though both inlets so that DNA would be reversed immobilized and eluted.

The microchip was connected to a UV spectrophotometer (UV-sensitive Peltier cooled detection setup from 0-metrisis) (www.θ-metrisis.gr) as follows: a PEEK tube with an outside diameter (OD) of 360µm from the exit of the chip is connected to a uvol SMA-Z-Flow cell *(FIAlab* Instruments) and the UV absorbance signal from the 2.5mm path is recorded by the spectrophotometer. As a last step DNA effluents were collected in eppendorf tubes and absorbance was measured via a NanoDrop 8000 device. From elaboration on the data the recovery of the Salmonella DNA was estimated and thus, the efficiency of the chip.

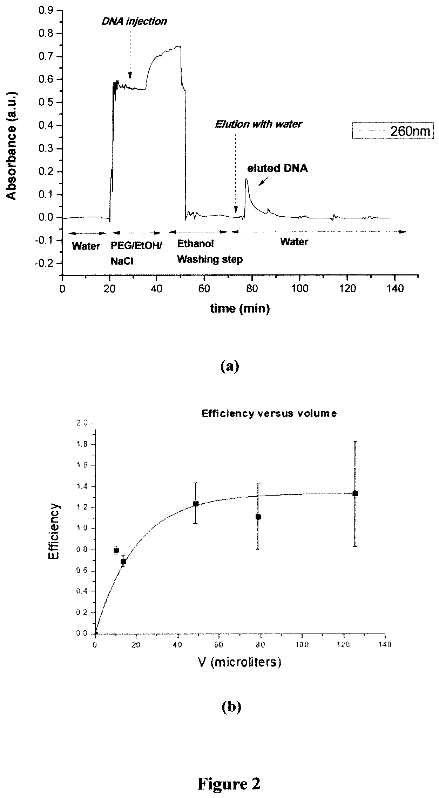

Figure 2 (a) shows the Salmonella DNA purification protocol and how it was recorded by the spectrophotometer at 260nm. In particular the UV absorbance signal at 260nm of microfluidic chip effluent is monitored versus time showing the DNA purification protocol on-chip. Samples were pre-purified Salmonella DNA (500ng), entering with a flow rate of 5µl/min. Also the efficiency of the recovery after DNA purification is plotted versus the total eluted volume of effluents from the chip in Figure 2 (b), showing that it is ∼100% above 40 microliters volume.

Similar results were obtained with Cyclo Olephin Polymer (COP) chips.

### Comparative Example 2: Large quantity of human genomic DNA purification on a PMMA plasma micro-nanotextured microchip

The PMMA surfaces of the microchips were micro-nanotextured as described in comparative example 1 and the DNA purification protocol used consists of three basic steps: a) Immobilization of DNA, b) Ethanol Washing step and c) Elution with Water. At first, a small plug volume of pre-purified human genomic DNA of 200ng was injected on the chip through one inlet followed by a solution containing 3% PEG, 0.4M NaCl and 70% ethanol as precipitating/binding buffer, while at the same time the same precipitating/binding buffer is injected through the other inlet. Afterwards 85% ethanol was injected through both inlets of the chip so that impurities would be removed. As a last step water was injected though both inlets so that DNA would be reversed immobilized and eluted.

The microchip was connected to a UV spectrophotometer (UV-sensitive Peltier cooled detection setup from 0-metrisis) (www.θ-metrisis.gr) as follows: a 360 µm OD silica capillary tube with inside diameter (ID) of 200 µm from the exit of the chip is aligned between two optical fibers of 200 µm diameter and the UV signal from this 200 µm path is recorded by the spectrophotometer.

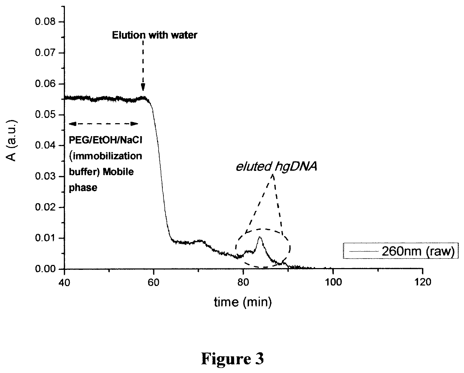

Figure 3 shows the UV absorbance signal of eluted human genomic DNA, which was recorded by the spectrophotometer at 260nm. The UV absorbance signal at 260nm of microfluidic chip effluent is monitored versus time showing the purification protocol for pre-purified hg DNA (200ng) entering with a flow rate of 1µl/min.

### Comparative Example 3: Small quantity of Salmonella DNA purification (corresponding to 10-100 cells) on a plasma micro-nanotextured polymeric microchip.

The polymeric surfaces of the microchips were micro-nanotextured as described in comparative example 1 and the DNA purification protocol that was followed consists of three basic steps: a) Immobilization of DNA, b) Ethanol Washing step and c) Elution with Water. At first, Salmonella cell lysate with various concentrations that correspond to 10-100cells was injected on the chip through one inlet, while at the same time a solution containing 5% PEG, 0.4M NaCl and 70% ethanol as precipitating/binding buffer was injected through the other inlet. Afterwards 85% ethanol solution was injected through both inlets of the chip so that impurities would be removed. Then water was injected though both inlets so that DNA would be reversed immobilized and eluted. As a last step DNA effluents were collected in eppendorf tubes and evaluated via off-chip PCR and gel electrophoresis.

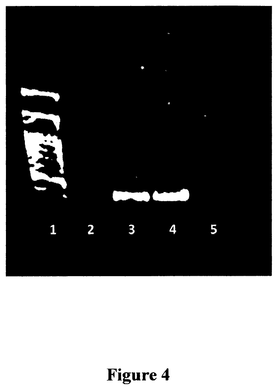

Figure 4 shows a gel electrophoresis image for DNA purification from Salmonella cell lysate effluents that correspond to 100 and 10 cells after PCR. The lanes in this figure represent: standard sizing ladder (1); concentrated cell lysate with debris (2); collected effluent from the chip from cell lysate corresponding to 10 cells (3) and collected effluent from the chip from cell lysate corresponding to 100 cells (4) and the control (5) (PCR via a thermocycler followed the collection of chip effluents for 30 cycles, using 1µl from each effluent in all cases). The zone is brighter for the gel that was performed after DNA purification for cell lysates from 10 and 100 cells, than the zone of the originating non-purified cell lysate, suggesting successful removal of the contaminants and DNA purification.

### Comparative Example 4: Integration of DNA purification microchip with other microfluidic modules

The polymeric surfaces of the microchips were micro-nanotextured as described in comparative example 1 and a setup of syringes micropumps and microvalves (LabSmith, Inc) was used for the sample/buffers injection and for connecting the different microfluidic components together.

A cell capture and lysis microfluidic device was connected through a valve with a 360 µm OD PEEK tube to the first inlet of the DNA purification module, while the outlet was connected with a 360 µm OD PEEK tube to an eppendorf tube or through a valve to an isothermal microfluidic device. The second inlet of the DNA purification module was directly connected to a microsyringe pump to facilitate injection of buffers into the chip.

Bacteria with varying concentration were introduced into the capture module (injection of 100 µl). After successive washing with 10 mM PBS, pH 7.4 in order to remove unbound cells (volume of 75 µl), cell lysis on chip was performed using a hotplate @ 93°C for 10 min. Elution of cell lysate with PBS was done with 10 µl/min (total volume that collected from chip effluents was 200 µl), the first 50µl was rejected and the successive 50µl of cell lysate was injected into the DNA purification module. At the same time injection of the precipitating/binding buffer containing 5% PEG, 0.4M NaCl and 70% ethanol (also 50µl volume) took place with the same flow rate. After successive washing with ethanol (85%), DNA elution was performed with water. After elution DNA effluents were either collected and evaluated via off-chip PCR and gel electrophoresis, or the eluted DNA was injected to the Helicase-dependent amplification (HDA) microfluidic chip, where isothermal amplification took place for 1.5 h at 65 °C. The collected DNA effluents were evaluated via gel electrophoresis. Figure 5 shows gel electrophoresis results from integration of two or three microchips together: In particular Figure 5 (a) shows a gel electrophoresis image after DNA purification from 50 and 5 Salmonella cells (PCR via a thermocycler followed the collection of chip effluents for 40 cycles, using 1µl from each sample in all cases). Here we integrated in series the Salmonella bacteria cell capture and lysis microchip and the DNA purification microchip. The lanes in this figure represent: standard sizing ladder (1); collected effluent after the two microchips in series for 50 Salmonella cells (2); and collected effluent after the two microchips in series for 5 Salmonella cells (3). Figure 5 (b) shows a gel electrophoresis image after on chip Helicase Dependent isothermal Amplification (HDA) from 500 cells Salmonella cells for 1.5 h at 65 °C. Here we integrated on chip the Salmonella bacteria cell capture and lysis microchip, with the DNA purification microchip and the HDA amplification microchip. The lanes in this figure represent standard sizing ladder (1); and the effluent after the three microchips in series of the HDA product from 500 Salmonella cells (2). As shown in Figures 5 (a-b) the DNA purification microchip exhibited successful integration with other microfluidic components, and ability to purify the DNA down to 5 cells.

### Comparative Example 5: Salmonella DNA purification on a PDMS plasma micro-nanotextured chip

### A) Microfluidic Chip fabrication

First, silicon wafers were spin-coated with a photosensitive SU-8 2035 resist (Microchem) which can act as negative resist. Secondly, the layer of the photoresist was exposed through a photomask using UV broadband light at 365 nm; thus forming a mold. Then a base pre-polymer with the respective curing agent of PDMS (Dow Corning, SylgardTM 184) were mixed and the final solution was cast over the mold for replicating the inverse of the mold on PDMS and baked at 100 °C for 1 h. The elastomeric substrate, which was produced this way, was easily peeled off the mold. PDMS films were treated in an SF₆ plasma generated in in a Helicon Plasma reactor with unshielded electrostatic fields (MET system, Adixen). Afterwards PDMS chips were treated for 1min in oxygen plasmas to create the SiO₂ functionality. Conditions were similar to those described in comparative example 1. Finally, the microchips were sealed with a PDMS elastomer cover.

### B) DNA purification

The DNA purification protocol used consists of three basic steps: a) Immobilization of DNA, b) Ethanol Washing step and c) Elution with Water. At first, the microchannel was conditioned with injecting a buffer of chaotropic salt GuSCN solution as precipitating/binding buffer through both inlets on the chip. Then a small plug volume of pre-purified Salmonella DNA of 500ng was injected on the chip through one inlet, while at the same time a buffer of chaotropic salt GuSCN solution is injected through the other inlet. Afterwards 70% ethanol solution was injected through both inlets on the chip, so that impurities would be removed. As a last step water was injected though both inlets so that DNA would be reversed immobilized and eluted.

### Example 6: Salmonella DNA purification on fresh and thermally stabilized plasma micro-nanotextured polymeric microchips

The PMMA surfaces of the microchips were micro-nanotextured as described in comparative example 1 and then stabilized with annealing at 110 °C for 30 min. After 4 months the stabilized organic polymer microchips were used for Salmonella DNA purification with the purification protocol described in comparative example 1 and compared with freshly fabricated microchips.

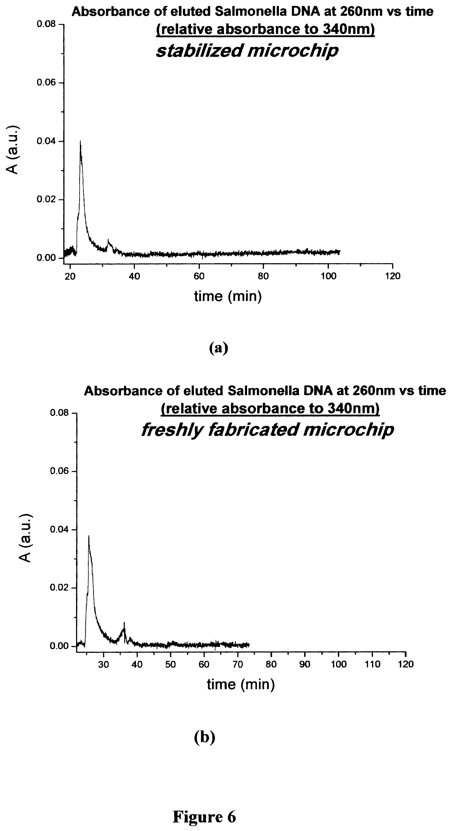

Figure 6 shows the UV absorbance signal at 260nm (relative to 340nm) of eluted Salmonella DNA (500ng) versus time for (a) a thermally stabilized microchip at 110°C for 30 min and (b) a freshly fabricated microchip. As shown in Fig.6 the stabilized microchips exhibit the same results i.e. absorbance and thus efficiency, as the freshly fabricated microchip when the same DNA purification protocol is followed. Therefore, thermally stabilized microchips provide stability over time, i.e. long shelf-life, and can be used after a long period of time.

## Claims

1. A microfluidic chip comprising a polymeric surface and a passive micromixer wherein the polymeric surface is micro-nanotextured with an oxygen containing plasma under anisotropic etching conditions in a plasma etching reactor, in the presence of an etching inhibitor originating from sputtering of plasma reactor walls or plasma reactor electrodes, and wherein after plasma micro-nanotexturing the microfluidic chip is subjected to a thermal annealing step by heating for 10 - 120 minutes at a temperature 5 to 40 °C below the glass transition temperature of the polymer of the polymeric surface.

2. A microfluidic chip according to claim 1, wherein the micro-nanotexturing with an oxygen containing plasma is preceded by micro-nanotexturing with a fluorine containing plasma.

3. A microfluidic chip according to claim 1 or 2, wherein the polymer of the polymeric surface is selected from the group consisting of polymers or copolymers containing acrylic, or olefinic, or phenolic monomers, silicones or silicon containing monomers.

4. A microfluidic chip according to claim 3, wherein the polymer of the polymeric surface is selected from the group consisting of poly(methyl methacrylate), polyether ether ketone, cyclic olefin copolymer, cyclo-olefin polymer, polyethylene terephthalate, polystyrene, polycarbonate.

5. A microfluidic chip according to any one of the preceding claims, wherein following the micro-nanotexturing with the oxygen containing plasma, a layer of solid phase extraction material is deposited on the polymeric surface, the solid phase extraction material being selected from the group consisting of SiO₂, TiO₂, ZrO₂, Al₂O₃, other metal oxide, an amine.

6. Use of a microfluidic chip according to any one of claims 1-5 for nucleic acid purification.

7. Use of a microfluidic chip according to any one of claims 1-5 for bacteria analysis from a sample obtained from a living organism, a food sample or an environmental sample.

8. A lab-on-a-chip system comprising a microfluidic chip according to any one of claims 1-5.

## Patentansprüche

1. Ein mikrofluidischer Chip, der eine polymere Oberfläche und einen passiven Mikromischer umfasst, wobei die polymere Oberfläche mit einem sauerstoffhaltigen Plasma unter anisotropen Ätzbedingungen in einem Plasmaätzreaktor in Gegenwart eines Ätzinhibitors, der durch Zerstäuben von Plasmareaktorwänden oder Plasmareaktorelektroden entsteht, mikro-nano-strukturiert wird, und wobei nach der Plasma-Mikro-Nanostrukturierung der Mikrofluidik-Chip einem thermischen Glühschritt durch Erhitzen für 10 - 120 Minuten bei einer Temperatur von 5 bis 40 °C unterhalb der Glasübergangstemperatur des Polymers der polymeren Oberfläche unterzogen wird.

2. Ein mikrofluidischer Chip nach Anspruch 1, wobei der Mikro-Nanotexturierung mit einem sauerstoffhaltigen Plasma eine Mikro-Nanotexturierung mit einem fluorhaltigen Plasma vorausgeht.

3. Ein mikrofluidischer Chip nach Anspruch 1 oder 2, wobei das Polymer der Polymeroberfläche aus der Gruppe ausgewählt wird, die aus Polymeren oder Copolymeren besteht, die acrylische oder olefinische oder phenolische Monomere, Silikone oder siliziumhaltige Monomere enthalten.

4. Ein mikrofluidischer Chip nach Anspruch 3, wobei das Polymer der Polymeroberfläche aus der Gruppe ausgewählt wird, die aus Poly(methylmethacrylat), Polyetheretherketon, cyclischem Olefin-Copolymer, Cycloolefinpolymer, Polyethylenterephthalat, Polystyrol, Polycarbonat besteht.

5. Ein mikrofluidischer Chip nach einem der vorstehenden Ansprüche, wobei nach der Mikro-Nanotexturierung mit dem sauerstoffhaltigen Plasma eine Schicht aus Festphasenextraktionsmaterial auf der Polymeroberfläche hinterlegt wird, wobei das Festphasenextraktionsmaterial aus der Gruppe ausgewählt wird, die aus SiO₂, TiO₂, ZrO₂, Al₂O₃, einem anderen Metalloxid, einem Amin besteht.

6. Verwendung eines mikrofluidischen Chips nach einem der Ansprüche 1-5 zur Nukleinsäure-Reinigung.

7. Verwendung eines mikrofluidischen Chips nach einem der Ansprüche 1-5 zur Bakterienanalyse aus einer Probe, die aus einem lebenden Organismus, einer Lebensmittelprobe oder einer Umweltprobe erhalten wurde.

8. Ein Lab-on-a-Chip-System, das einen mikrofluidischen Chip nach einem der Ansprüche 1-5 umfasst.

## Revendications

1. Une puce microfluidique comprenant une surface polymère et un micromélangeur passif dans lequel la surface polymère est micro-nanotexturée avec un plasma contenant de l'oxygène dans des conditions de gravure anisotrope dans un réacteur de gravure plasma, en présence d'un inhibiteur de gravure provenant de la pulvérisation des parois du réacteur plasma ou des électrodes de réacteur à plasma, et dans laquelle, après micro-nanotexturation au plasma, la puce microfluidique est soumise à une étape de recuit thermique par chauffage pendant 10 à 120 minutes à une température de 5 à 40 °C en dessous de la température de transition vitreuse du polymère de la surface polymère.

2. Une puce microfluidique selon la revendication 1, dans laquelle la micro-nanotexturation avec un plasma contenant de l'oxygène est précédée d'une micro-nanotexturation avec un plasma contenant du fluor.

3. Une puce microfluidique selon la revendication 1 ou 2, dans laquelle le polymère de la surface polymère est choisi dans le groupe constitué de polymères ou copolymères contenant des monomères acryliques ou oléfiniques ou phénoliques, des silicones ou du silicium contenant des monomères.

4. Une puce microfluidique selon la revendication 3, dans laquelle le polymère de la surface polymérique est choisi dans le groupe constitué par le poly (méthacrylate de méthyle), la polyéther éther cétone, le copolymère d'oléfine cyclique, le polymère de cyclooléfine, le polyéthylène téréphtalate, le polystyrène, le polycarbonate.

5. Une puce microfluidique selon l'une quelconque des revendications précédentes, dans laquelle suite à la micro-nanotexturation avec le plasma contenant de l'oxygène, une couche de matériau d'extraction en phase solide est déposée sur la surface polymérique, le matériau d'extraction en phase solide étant choisi dans le groupe consistant en SiO₂, TiO₂, ZrO₂, Al₂O₃, un autre oxyde métallique, une amine.

6. Utilisation d'une puce microfluidique selon l'une quelconque des revendications 1 à 5 pour la purification d'acide nucléique.

7. Utilisation d'une puce microfluidique selon l'une quelconque des revendications 1 à 5 pour l'analyse de bactéries à partir d'un échantillon obtenu à partir d'un organisme vivant, d'un échantillon alimentaire ou d'un échantillon environnemental.

8. Système de laboratoire sur puce comprenant une puce microfluidique selon l'une quelconque des revendications 1 à 5.
